# Europäisches Patentamt
# European Patent Office
# Office européen des brevets

(19)

(11) Numéro de publication: **0 148 808**
**B1**

(12)

# FASCICULE DE BREVET EUROPÉEN

(45) Date de publication du fascicule du brevet:
**29.06.88**

(51) Int. Cl.⁴: **H 04 M 1/31**

(21) Numéro de dépôt: **85420004.5**

(22) Date de dépôt: **10.01.85**

(54) Clavier de numérotation téléphonique protégé contre les surcharges.

(30) Priorité: **11.01.84 FR 8401071**

(43) Date de publication de la demande:
**17.07.85 Bulletin 85/29**

(45) Mention de la délivrance du brevet:
**29.06.88 Bulletin 88/26**

(84) Etats contractants désignés:
**AT BE CH DE FR GB IT LI LU NL SE**

(56) Documents cité:
**FR-A-2 504 323**
**GB-A-2 055 022**

**ELECTRONIC COMPONENTS & APPLICATIONS,
vol. 1, no. 1, octobre 1978, pages 29-41, Eindhoven,
NL; J.J.A. GEBOERS et al.: "Two-tone telephone
dialling"**

(73) Titulaire: **HORLOGERIE PHOTOGRAPHIQUE
FRANCAISE, Le Bouchet, F-74130 Bonneville (FR)**

(72) Inventeur: **Montenot, Jean, Buisson Rond, F-74250
Fillinges (FR)**

(74) Mandataire: **de Beaumont, Michel, Cabinet Poncet
7, chemin de Tillier B.P. 317, F-74008 Annecy
Cédex (FR)**

LIBER, STOCKHOLM 1988

## Description

La présente invention concerne les postes téléphoniques, et plus particulièrement les ensembles appelés claviers pour la commutation et la numerotation téléphonique.

Lors de la numérotation téléphonique, le clavier assure plusieurs fonctions il court-circuite le combiné téléphonique, il court-circuite le circuit de sonnerie, et il assure le bouclage et le débouclage répétitif de la ligne pour produire les impulsions de numérotation dans le cas des claviers de type décimal, ou la génération des signaux bifréquence de numérotation dans le cas des claviers de type multifréquence.

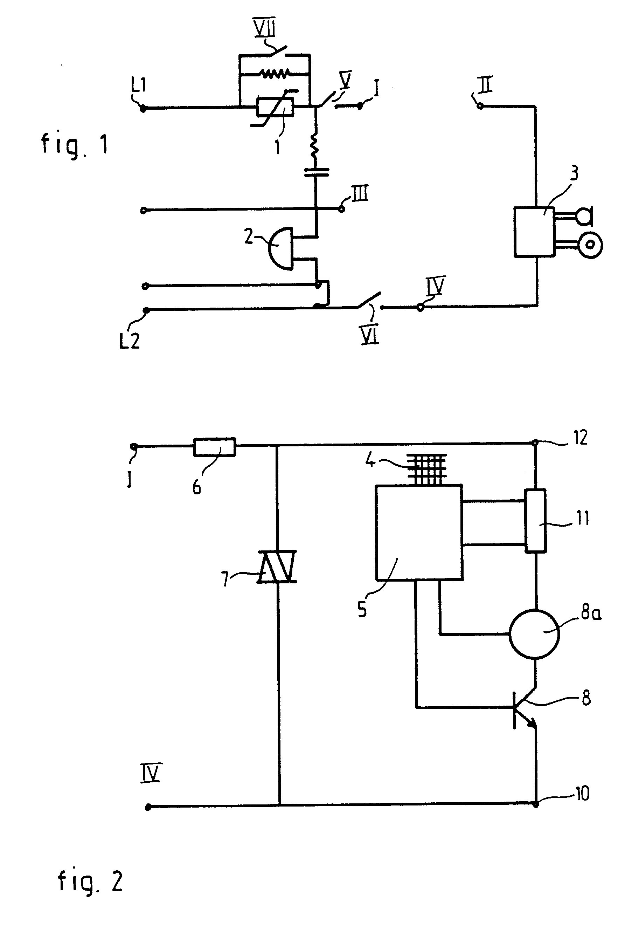

Les postes téléphoniques habituellement utilisés comprennent un fond de poste, représenté sur la figure 1, qui se connecte entre les fils de ligne L1 et L2 et qui comporte quatre bornes de connexion I, II, III, IV pour le dispositif de numérotation non représenté sur la figure 1. La borne I est connectée au fil de ligne il par l'intermédiaire d'une résistance à coefficient de température positif 1 en série avec un premier contact V de crochet, et à la borne III par l'intermédiaire d'une résistance et d'un condensateur connectés en série. La résistance à coefficient de température positif 1 est en outre connectée, sur les postes classiques, en parallèle sur un contact de court-circuit VII. Le circuit de sonnerie 2 est connecté entre la borne III et le fil de ligne L2, la borne IV étant connectée au fil de ligne L2 par l'intermédiaire d'un second contact VI de crochet. Le combiné téléphonique 3 est connecté entre la borne IV et la borne II.

Le dispositif de numérotation, cadran téléphonique ou clavier, établit lors de la numérotation des connexions entre certaines des bois I, II, III et IV, pour éviter les tintements de sonnerie et atténuer les signaux acoustiques transmis par le combiné 3. Il assure en outre soit les ouvertures et fermetures en forme d'impulsions entre les bornes I et II pour produire la numérotation décimale, soit la génération entre ces mêmes bornes des signaux bifréquence de numérotation pour produire la numérotation multifréquence.

Un premier inconvénient de ces dispositifs consiste dans le fait que la résistance 1 à coefficient de température positif, dont le rôle est d'assurer une régulation du courant de ligne, présente à ses bornes une tension non négligeable de l'ordre de trois volts en moyenne. Cette tension se retranche à celle de la ligne, de sorte que le combiné 3 travaille sous une tension inférieure, qui limite le fonctionnement du poste téléphonique à des lignes de longueurs relativement faibles.

Un autre problème consiste dans le fait que la résistance 1 est un composant très vulnérable aux surcharges électriques, et qu'en particulier les nouvelles normes très sévères exigées pour les postes téléphoniques ne peuvent pas être respectées par cette technique. Ainsi la norme ST/LAA/RLM 88 de l'Administration Française des Postes et Télécommunications exige notamment que le poste téléphonique puisse tenir, sans aucune détérioration de composant, des ondes électriques reçues sur les fils de ligne L1 et L2 telles que les formes d'onde suivantes: une tension de 48 volts superposée à une tension alternative de 100 volts efficaces pendant plus d'une heure; une onde de tension de valeur crête 1 500 volts avec un temps de montée de 0,5 microseconde et un temps de descente de 700 microsecondes; un train d'impulsions alternatives de 200 volts efficaces; un signal alternatif permanent de 100 volts efficaces pendant au moins un quart d'heure. En outre on admet la destruction d'un seul composant jusqu'à des tensions nettement supérieures à ces valeurs.

Le document GB-A-2 055 022 décrit un poste téléphonique conforme au préambule de la revendication 1. Dans ce poste, la protection est assurée par une diode Zener Z4, disposée en parallèle sur le circuit électronique, l'ensemble étant en série avec une résistance R10 de limitation de courant. Le circuit électronique connecté aux bornes de la diode Zener assure en outre une limitation à courant constant du courant qui le traverse. Dans un tel circuit, une tension importante telle qu'une tension de 100 volts apparaissant aux bornes de la ligne L1 - L2 est susceptible de produire un échauffement important des éléments tels que la résistance R10, la diode Zener Z4 et le transistor Q2. D'autre part, une surtension très importante apparaissant sur les fils de ligne conduit à un échauffement très rapide de la diode Zener Z4 et de la résistance R10. Il en résulte que ce dispositif n'est pas conçu pour tenir, sans détérioration de composant, les ondes électriques mentionnées ci-dessus.

La présente invention a notamment pour objet d'éviter les inconvénients des postes connus, en proposant un nouveau type de clavier, connectable entre les mêmes bornes I, II, III et IV des postes téléphoniques classiques, et qui assure par lui-même la protection du poste entier contre les surcharges. Le clavier de la présente invention permet de tenir complètement les spécifications demandées aux postes téléphoniques, alors qu'actuellement aucun dispositif ne le permet. Ainsi la mise en conformité des postes téléphoniques installés, selon les nouvelles normes, peut être réalisée en remplaçant simplement le cadran ou clavier existant par un clavier de la présente invention, et en court-circuitant la résistance à coefficient de température positif 1 par le contact de court-circuit VII. Aucune modification n'est donc nécessaire sur le reste du poste.

Selon un autre objet de l'invention, la protection est assurée sans nécessiter de conserver la résistance 1 à coefficient de température positif, de sorte que l'insertion du clavier ne réduise pas de manière significative la longueur maximale possible de ligne, pour les postes à micro au charbon.

Selon un autre objet de l'invention, le clavier

comporte un minimum de composants devant supporter des tensions élevées, de sorte que le dispositif peut être pour sa plus grande partie réalisé sous forme de circuit intégré basse tension.

Pour atteindre ces objets, ainsi que d'autres, la présente invention prévoit d'utiliser un clavier comportant au moins un transistor de protection, connecté en série avec les moyens d'alimentation du clavier et avec les moyens générateurs destinés à assurer soit le débouclage de la ligne pour produire les impulsions de numérotation décimale soit l'émission de signal bifréquence pour produire la numérotation multifréquence. Le transistor de protection est commandé par un circuit de commande pour réaliser une limitation de courant à rabattement. Un composant suppresseur de surtensions est connecté en parallèle sur l'ensemble transistor de protection - moyens générateurs - moyens d'alimentation. Une résistance fusible est connectée en série avec l'ensemble formé par les moyens générateurs, les moyens d'alimentation, le transistor de protection et le composant suppresseur de surtensions. Lors de l'adaptation sur un poste actuel, on court-circuite la résistance à coefficient de température positif.

De façon préférée, le circuit de corde et le transistor produisent une caractéristique tension-courant dont la forme comprend une première zone à caractéristique de type Zener à forte pente, une seconde et troisième zones de limitation de courant à faible pente, et une quatrième zone à rabattement progressif de courant.

Selon un mode de réalisation de l'invention, les moyens générateurs sont constitués par le transistor de protection et le circuit de commande eux-mêmes qui seront conçus pour réaliser simultanément ses fonctions.

Selon un mode de réalisation de l'invention, le transistor de protection a sa base commandée par un interface d'adaptation d'impédance lui-même commandé en injection de courant par le circuit de commande. Seuls les interfaces doivent être réalisés en composants tenant une tension élevée, le circuit de commande pouvant être intégré selon les technologies basse tension.

D'autres objets, caractéristiques et avantages de la présente invention ressortiront de la description suivante d'un mode de réalisation particulier, faite en relation avec les figures jointes parmi lesquelles:
- la figure 1 représente un fond de poste habituel d'un poste téléphonique français;
- la figure 2 représente schématiquement les moyens de protection selon un mode de réalisation de l'invention;
- la figure 3 représente le schéma électrique d'un ensemble de protection du clavier selon la présente invention; et
- la figure 4 illustre les zones de fonctionnement des dispositifs de protection.

Le clavier selon la présente invention est destiné à être connecté entre les bornes I, II, III et IV d'un circuit de fond de poste téléphonique tel que représenté sur la figure 1. Lors de la construction d'un tel poste téléphonique devant comprendre le clavier de la présente invention, on peut supprimer la résistance à coefficient de température positif 1, et la remplacer par un court-circuit. Lors de l'adaptation du clavier selon la présente invention sur un poste déjà équipé d'une résistance 1, il convient de court-circuiter cette résistance à l'aide du contact de court-circuit VII.

Comme le représente la figure 2, le clavier selon la présente invention comporte un ensemble de touches 4 connecté à un circuit de commande 5. Le circuit 5 a pour fonction de commander les organes assurant la protection du clavier et du poste et la production des numéros téléphoniques correspondant aux touches 4 enfoncées par l'utilisateur. Le clavier comprend des moyens générateurs 8a assurant soit le débouclage de la ligne pour produire les impulsions décimales dans le cas des claviers décimaux, soit l'émission de signaux bifréquence pour produire la numérotation multifréquence. Un transistor 8, commandé par le circuit de commande 5, participe à la protection de l'ensemble.

Dans le mode de réalisation représenté sur la figure 2, le transistor 8 est connecté électriquement en série avec les moyens générateurs 8a et les moyens d'alimentation 11 du clavier en énergie électrique, l'ensemble étant limité par une borne positive 12 et une borne négative 10 de clavier.

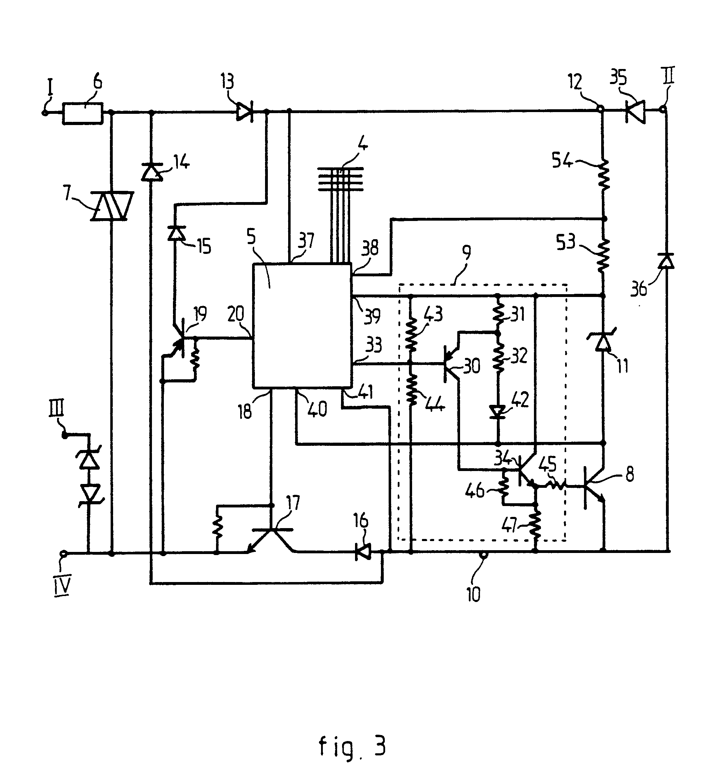

Une résistance fusible 6 est connectée en série avec un composant suppresseur de surtensions 7 entre les bornes I et IV. La résistance fusible 6 est destinée à couper le circuit lorsque le courant dépasse une certaine valeur pendant un temps supérieur à un temps prédéterminé. Le composant suppresseur de surtensions 7 est un composant de type = Diac, c'est-à-dire présentant une impédance faible équivalent à un court-circuit lorsque la tension à ses bornes atteint un seuil prédéterminé, et présentant une résistance très grande, équivalent à un circuit ouvert, tant que la tension à ses bornes n'a pas atteint ce seuil. Les autres éléments du clavier de la présente invention sont connectés aux bornes du composant suppresseur de surtensions 7, comme le représentent les figures 2 et 3.

Dans le mode de réalisation représenté sur la figure 3, les moyens générateurs 8a sont constitués par le transistor 8 et le circuit de commande 5 eux-mêmes qui assurent ses fonctions. Le transistor 8 est de type NPN, sa base est commandée par un interface d'adaptation d'impédance 9 lui-même commandé en injection de courant par le circuit de commande 5. Le transistor 8 a son émetteur connecté à la borne négative 10 du clavier, son collecteur étant connecté à l'anode d'une diode Zener 11 dont la cathode est connectée à la borne positive 12 du clavier par l'intermédiaire de deux résistances de faible valeur 53 et 54 connectées en séries.

L'alimentation du circuit de commande 5 s'effectue aux bornes de la diode Zener 11, par les entrés 39 et 40 du circuit 5. L'ensemble, compris entre la borne positive 12 et la borne négative 10 est connecté en parallèle sur le composant suppresseur de surtensions 7 par l'intermédiaire d'un pont redresseur double alternance à quatre diodes 13, 14, 15 et 16 dont les deux branches connectées à l'une des deux bornes du composant suppresseur de surtensions 7, par exemple à la borne IV, comprennent une diode connectée en série avec un transistor de commutation. Ainsi, la diode 16, dont l'anode est connectée à la borne négative 10, a sa cathode connectée au collecteur d'un transistor NPN/de commutation 17 dont l'émetteur est connecté à la borne IV et dont la base est commandée par une sortie correspondante 18 du circuit de commande 5; la diode 15, dont la cathode est connectée à laborne positive 12, a son anode connectée au collecteur d'un transistor PNP/de commutation 19 dont l'émetteur est connecté a la borne IV et dont la base est commandée par une sortie correspondante 20 du circuit de commande 5.

Les transistors de commutation 17 et 19 ont pour fonction, pendant la numérotation, d'élimner l'influence de l'impédance du combiné 3 et d'atténuer les signux acoustiques transmis par ce combiné. Ce mode de réalisation de la fonction de commutation est adapté à des postes à micro-charbon ou équivalent. Elle peut toutefois être réalisée par d'autres méthodes connues.

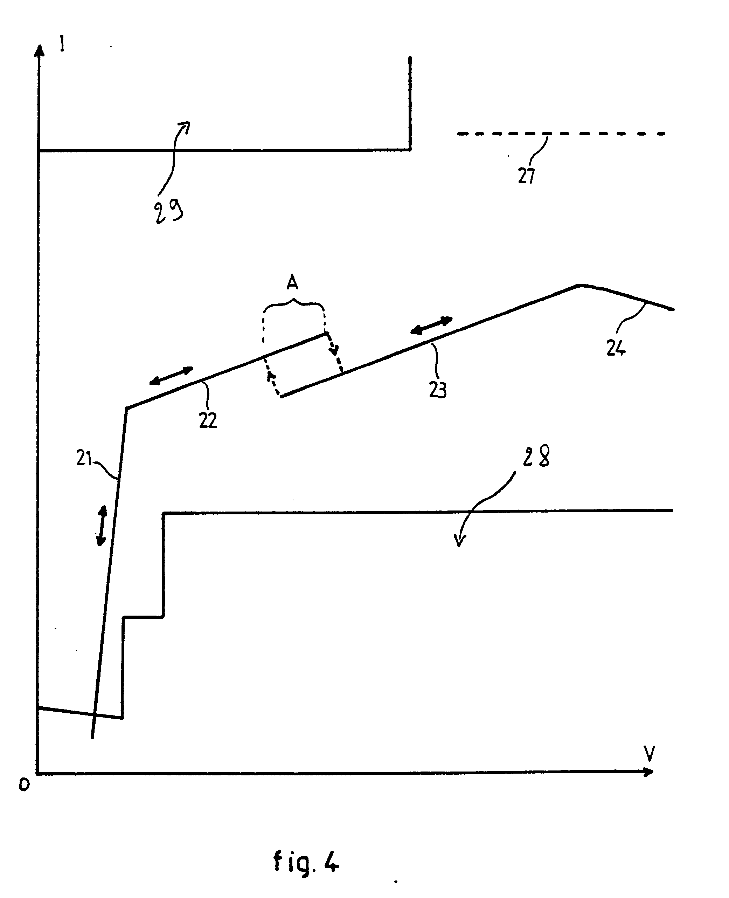

Le transistor 8, qui assure la fonction de générateur pour la numérotation, assure en outre une fonction de contrôle de la caractéristique tension-courant du poste téléphonique et une fonction de protection par limitation et rabattement de courant. Cette caractéristique tension-courant, représentée sur la figure 4, comprend une première zone 21 à caractéristique de type Zener, c'est-à-dire à forte pente du courant en fonction de la tension sur le diagramme, une seconde et troisième zones 22 - 23 de limitation de courant à faible pente, et une quatrième zone 24 à pente négative pour rabattement progressif du courant.

Dans les zones 21 et 22, l'impédance dynamique du dispositif est faible en dehors de la période de numérotation, de l'ordre d'une trentaine d'ohms, et égale à environ 600 ohms pendant la numérotation. Dans les zones 23 et 24, l'impédance dynamique est égale à 600 ohms environ. Le passage entre les zones 22 et 23 s'effectue dans une zone de recouvrement A par une commutation à hystérésis représentée par les flèches, pour éviter, dans cette zone de recouvrement, les commutations multiples dûes aux signaux à fréquence vocale transmis. Le transistor 8 assure en outre une limitation rapide de courant, représentée par la ligne 27, cette limitation s'effectuant à une valeur comprise entre cinquante et cent milli-ampères, et assurant la protection en cas de surcharge impulsionnelle.

Pour réaliser ces fonctions de caractéristique tension-courant, le transistor 8 est commandé par le circuit de commande 5.

Le circuit de commande 5 comporte une entrée 41 connectée à la borne négative 10 pour prendre l'image de la tension à laquelle est soumis le circuit, et une entrée 37 connectée à la borne positive 12 pour prendre l'image du courant traversant le circuit. La borne 38, connectée au point milieu des résistances 53 et 54, donne l'image du courant pour la limitation impulsionnelle 27. Ces informations sont transformées dans le circuit de commande 5 pour assurer la commande du transistor 8 et produire la caractéristique correspondant au diagramme de la figure 4.

Le circuit de commande est réalisé par tout moyen connu dans la technique électronique basse tension, de sorte qu'il est inutile dans la présente description de décrire en détail la réalisation de ce circuit.

Les zones de fonctionnement 21 à 24 précédemment décrites sont choisies pour être comprises dans les zones permises de fonctionnement, c'est à dire entre les zones interdites 28 et 29 du diagramme. De la sorte, la protection du poste téléphonique est assurée conformément aux spécifications en vigueur.

Comme le représente la figure 3, l'interface 9 du moyen générateur permet de commander le transistor 8, qui doit supporter des tensions élevées, par un circuit de commande 5 soumis à des tensions faibles. Le circuit 5 peut ainsi être intégré selon les technologies à faible tension. L'interface 9 comprend un premier transistor 30, de type PNP, dont l'émetteur est connecté au point milieu d'un pont de résistance-diode 31, 32, 42 lui-même connecté en parallèle sur la diode Zener 11. La base du transistor 30 est connectée à la borne de sortie correspondante 33 du circuit de commande, la borne 33 fournissant le signal de commande pour le transistor 8. La base du transistor est en outre connectée au point milieu d'un pont de résistances 43 - 44 connecté entre la cathode de la diode Zener 11 et la borne négative 10. Le collecteur du transistor 30 est connecté à la base d'un second transistor 34 de type NPN dont le collecteur est connecté à la cathode de la diode Zener 11 et dont l'émetteur est connecté à la base du transistor 8 par l'intermédiaire d'une résistance 45.

L'émetteur du transistor 34 est connecté en outre à sa base par une résistance 46 et à la borne négative 10 par une résistance 47.

Dans un autre mode de réalisation, on peut supprimer le transistor 34 et les résistances 45 et 46 en remplaçant le transistor NPN 8 par un transistor de type V-MOS dont la grille est connectée directement au collecteur du transistor 30.

L'émetteur du transistor 30 est fixé à un potentiel pratiquement constant par le pont de résistances 31 - 32, de sorte que le potentiel de sa base est également relativenent constant, et que le circuit de commande peut produire sur sa

sortie 33 une commande en courant doit le potentiel ne dépend pas des conditions de tension auxquelles est soumis le transistor 8.

La borne II est connectée à l'anode d'une diode 35 dont la cathode est connectée à la borne positive 12, et est connectée à la cathode d'une diode 36 dont l'anode est connectée à la borne négative 10.

La présente invention n'est pas limitée aux modes de réalisation qui ont été explicitement décrits, mais elle en inclut les diverses variantes et généralisation contenues dans le domaine des revendications ci-après.

## Revendications

1. Clavier de numérotation téléphonique, comprenant des moyene générateurs (8a) assurant soit le débouclage de la ligne pour produire les impulsions de numérotation décimale soit l'émission de signaux bifréquence pour produire la numérotation multifréquence, une résistance (6) et un transistor (8) connectés en série avec des moyens d'alimentation (11) du clavier et du poste, le transistor (8) étant commandé par un circuit de commande (5) pour réaliser une limitation du courant traversant les moyens générateurs (8a) et les moyens d'alimentation (11),
caractérisé en ce que:
- le circuit de commande (5) commande le transistor (8) pour présenter une caractéristique tension-courant comprenant une zone (24) à rabattement progressif de courant;
- un composant (7) suppresseur de surtensions de type Diac est connecté en parallèle sur l'ensemble transistor (8)-moyens générateurs-moyens d'alimentation (11);
- la résistance (6) est une résistance fusible et est connectée en série avec l'ensemble formé par les moyens d'alimentation (11), le transistor (8), les moyens générateurs (8a) et le composant suppresseur de surtensions (7).

2. Clavier selon la revendication 1, caractérisé en ce que le circuit de commande (5) commande le transistor (8) pour présenter une caractéristique tension-courant comprenant une premiere zone (21) à caractéristique de type Zener à forte pente, une seconde (22) et troisième (23) zones de limitation de courant à faible pente, et une quatrième zone (24) à rabattement progressif de courant.

3. Clavier selon la revendication 2, caractérisé en ce que le circuit de commande (5) produit en outre une limitation rapide de courant (27) comprise entre cinquante et cent milli-ampères en cas de surcharge impulsionnelle.

4. Clavier selon l'une quelconque des revendications 1 à 3, caractérisé en ce que les moyens générateurs (8a) sont constitués par le transistor (8) et la circuit de commande (5) eux-mêmes qui assurent par eux-mêmes d'une part la fonction de générataur pour la numérotation et d'autre part la fonction de contrôle de la caractéristique tension-courant du poste téléphonique et une fonction de protection par limitation et rabattement de courant.

5. Clavier selon la revendication 4, caractérisé en ce que le circuit de commande (5) produit, dans les première (21) et seconde (22) zones, une impédance dynamique de générateur égale à 600 ohms environ lors de la numérotation, et de l'ordre de 30 ohms hors numérotation, la troisième zone (23) présentant une impédance dynamique égale à 600 ohms environ.

6. Clavier selon l'une quelconque des revendications 1 à 5, caractérisé en ce que la base du transistor (8) est commandée par un interface d'adaptation d'impédance (9) lui-même commandé en injection de courant par le circuit de commande (5).

7. Clavier selon la revendication 6, caractérisé en ce que le transistor (8) est de type NPN et a son émetteur connecté à la borne négative (10) du clavier, son collecteur étant connecté à l'anode d'une diode Zener (11) dont la cathode est connectée à la borne positive (12) du clavier par l'intermédiaire de deux résistances (53, 54) de faible valeur en série, l'alimentation du circuit de commande s'effectuant aux bornes de la diode Zener (11).

8. Clavier selon la revendication 7, caractérisé en ce que l'interface (9) d'adaptation d'impédance comprend un premier transistor (30) de type PNP dont l'émetteur est connecté au point milieu d'un pont de résistance (31, 32), lui-même connecté en parallèle sur la diode Zener (11), sa base étant connectée à la borne de sortie correspondante (33) du circuit de commande (5), son collecteur étant connecté à la base d'un second transistor (34) de type NPN dont le collecteur est connecté à la borne positive (12) des moyens interrupteurs et dont l'émetteur est connecté à la base des transistors interrupteurs (8).

9. Clavier selon la revendication 1, caractérisé en ce que des moyens de commutation (17, 19) sont connectés en parallèle sur le composant suppresseur de surtensions (7) par l'intermédiaire d'un pont redresseur à diodes (13, 14, 15, 16) dont les deux branches connectées à l'une des bornes (IV) du composant comprennent une diode (15, 16) connectée en série avec un transistor de commutation (17, 19) dont l'émetteur est connecté à ladite borne (IV), le collecteur connecté à la diode, et la base connectée à une sortie correspondante (18, 20) du circuit de commande (5).

## Patentansprüche

1.Fernsprechwähltastatur mit Generatoreinrichtungen (8a), die einerseits die Freigabe der Linie gewährleisten, um Impulse der dezimalen Wahl zu erzeugen, und andererseits die Ausgabe von Bifrequenz-Signalen, um die Multifrequenz-Wahl zu erzeugen, einen Widerstand (6) und einen Transistor (8), die in Serie mit Versorgungseinrichtungen (11) der Tastatur und des Anschlusses geschaltet sind, wobei der Transistor (8) von einem Steuerkreis (5) gesteuert wird, um eine Begrenzung des Stroms zu verwirklichen, der die Generatoreinrichtungen (8a) und die Versorgungseinrichtungen (11) durchfließt, dadurch gekennzeichnet, daß:

der Steuerkreis (5) den Transistor (8) so steuert, daß er eine Strom/Spannungs-Kennlinie zeigt, die eine Zone (24) von fortschreitender Abnahme des Stroms aufweist;

ein Element (7) zur Unterdrückung von Überspannungen vom Typ Diac parallel zu der Anordnung des Transistors (8) -Generatoreinrichtungen- Versorgungseinrichtungen (11) geschaltet ist;

der Widerstand (6) ein Sicherungswiderstand ist und in Serie mit der Anordnung geschaltet ist, die durch die Versorgungseinrichtungen (11), den Transistor (8), die Generatoreinrichtungen (8a) und das Element zur Unterdrückung von Überspannungen (7) gebildet wird.

2. Tastatur nach Anspruch 1, dadurch gekennzeichnet, daß der Steuerkreis (5) den Transistor (8) so steuert, daß er eine Strom/Spannungs-Kennlinie zeigt, die eine erste Zone (21) mit einer Kennlinie vom Zener-Typ mit starker Steigung aufweist, eine zweite (22) und dritte (23) Zone der Strombegrenzung mit schwacher Steigung, und eine vierte Zone (24) mit fortschreitender Abnahme des Stroms.

3. Tastatur nach Anspruch 2, dadurch gekennzeichnet, daß der Steuerkreis (5) ferner eine Schnellbegrenzung des Stroms (27) zwischen 50 und 100 Milliampere im Falle einer Impuls-Überlastung erzeugt.

4. Tastatur nach einem der Ansprüche 1 bis 3, dadurch gekennzeichnet, daß die Generatoreinrichtungen (8a) durch den Transistor (8) und den Steuerkreis (5) selbst gebildet werden, welche von sich aus einerseits die Generatorfunktion für die Wahl übernehmen und andererseits die Steuerfunktion für die Strom/Spannungs-Kennlinie des Telefonanschlußes und eine Schutzfunktion durch Begrenzung und Abnahme des Stroms.

5. Tastatur nach Anspruch 4, dadurch gekennzeichnet, daß der Steuerkreis (5) in seiner ersten (21) und zweiten (22) Zone eine dynamische Impedanz des Generators von etwa 600 Ohm zum Zeitpunkt der Wahl erzeugt, und in der Größenordnung von 30 Ohm außerhalb der Wahl, wobei die dritte Zone (23) eine dynamische Impedanz von etwa 600 Ohm zeigt.

6. Tastatur nach einem der Anspruche 1 bis 5, dadurch gekennzeichnet, daß die Basis des Transistors (8) durch eine Schnittstelle (9) für die Impedanzanpassung gesteuert wird, die ihrerseits durch den Steuerkreis (5) im Stromeinlauf gesteuert wird.

7. Tastatur nach Anspruch 6, dadurch gekennzeichnet, daß der Transistor (8) vom Typ NPN ist und mit seinem Emitter mit einem negativen Anschluß (10) der Tastatur verbunden ist, wobei sein Kollektor mit der Anode einer Zehner-Diode (11) verbunden ist, deren Kathode mit dem positiven Anschluß (12) der Tastatur durch Vermittlung von zwei Widerständen (53, 54) von geringem Wert in Serie verbunden ist, und die Versorgung des Steuerkreises an den Anschlüssen der Zehner-Diode (11) geschieht.

8. Tastatur nach Anspruch 7, dadurch gekennzeichnet, daß die Schnittstelle (9) für die Impedanzanpassung einen ersten Transistors (30) vom Typ PNP aufweist, dessen Emitter mit dem Mittelpunkt einer Widerstandsbrücke (31, 32) verbunden ist, die ihrerseits parallel mit der Zehner-Diode (11) geschaltet ist, wobei seine Basis mit dem Anschluß des entsprechenden Ausgangs (33) des Steuerkreises (5) verbunden ist, und sein Kollektor mit der Basis eines zweiten Transistors (34) vom Typ NPN verbunden ist, dessen Kollektor mit dem positiven Anschluß (12) der Unterbrechungseinrichtungen verbunden ist und dessen Emitter mit der Basis der Unterbrechertransistoren (8) verbunden ist.

9. Tastatur nach Anspruch 1, dadurch gekennzeichnet, daß die Umschalteinrichtungen (17, 19) parallel mit dem Element zur Unterdrückung der Überspannungen (7) durch Vermittlung einer Gleichrichterbrücke mit Dioden (13, 14, 15, 16) geschaltet sind, deren zwei Zweige, die mit einem der Anschlüsse (IV) des Elements verbunden sind, eine Diode (15, 16) aufweisen, die in Serie mit einem Umschalttransistor (17, 19) verbunden ist, dessen Emitter mit den Anschlüssen (IV) verbunden ist, wobei der Kollektor mit der Diode verbunden ist, und die Basis mit einem entsprechenden Ausgang (18, 20) des Steuerkreises (5) verbunden ist.

**Claims**

1. A telephone dialling keyboard comprising generating means (8a) assuring either the opening of the line for generating the decimal numbering pulses or the transmission of dual frequency signals to establish the multifrequency dialling mode, a resistor (6) and a transistor (8) connected in series with means of supply (11) for the keyboard and the set, the transistor (8) being controlled by means of a control circuit (5) to produce a limitation of the current passing through the generating means (8a) and the supply means (11), characterised in that:

- the control circuit (5) operates the transistor (8) to display a voltage-current characteristic comprising a section (24) of progressive current reduction;

- an overvoltage suppressor component (7) of the Diac type is connected in parallel with the aggregate formed by the transistor (8), the generating means and the supply means (11);

- the resistor (6) is a fusible resistance and is

connected in series with the aggregate formed by the supply means (11), the transistor (8), the generating means (8a) and the overvoltage suppressor component (7).

2. A keyboard according to claim 1, characterised in that the control circuit (5) operates the transistor (8) to display a voltage-current characteristic comprising a first section (21) of a high-gradient Zener type characteristic, a second (22) and third (23) sections of low-gradient current limitation, and a fourth section (24) of progressive current reduction.

3. A keyboard according to claim 2, characterised in that the control circuit (5) furthermore engenders a rapid current limitation (27) comprised between fifty and one hundred milli-amps in case of a pulse overload.

4. A keyboard according to any one of the claims 1 to 3, characterised in that the generating means (8a) comprise the actual transistor (8) and the control circuit (5) which, by themselves, on the one hand provide the generating function for the dialling operation and on the other hand the checking function for the voltage-current characteristic of the telephone set, and a protective function by means of current limitation and reduction.

5. Keyboard according to claim 4, characterised in that the control circuit (5) causes the establishment in the first (21) and second (22) sections, of a dynamic generator impedance equal to approximately 600 Ohms during the dialling operation, and of the order of 30 Ohms during non-dialling periods, the third section (23) having a dynamic impedance equal to approximately 600 Ohms.

6. A keyboard according to any one of claims 1 to 5, characterised in that the base of the transistor (8) is controlled by an impedance matching interface (9) itself controlled in injection of current by the control circuit (5).

7. A keyboard according to claim 6, characterised in that the transistor (8) is of the NPN type and has its emitter connected to the negative terminal (10) of the keyboard, its collector being connected to the anode of a Zener diode (11) the cathode of which is connected to the positive terminal (12) of the keyboard through the medium of two low-value resistors (53, 54) in series, the supply of the control circuit being effected at the terminals of the Zener diode (11).

8. A keyboard according to claim 7, characterised in that the impedance matching interface (9) comprises a first transistor (30) of PNP type the emitter of which is connected to the centre point of a resistance bridge (31, 32), itself connected in parallel with the Zener diode (11), its base being connected to the corresponding output terminal (33) of the control circuit (5), its collector being connected to the base of a second transistor (34) of NPN type the collector of which is connected to the positive terminal (12) of the interruptor means and the emitter of which is connected to the base of the interruptor transistors (8).

9. A keyboard according to claim 1, characterised in that switching means (17, 19) are connected in parallel with the overvoltage suppressor component (7) through the medium of a rectifier bridge having diodes (13, 14, 15, 16) the two branches of which connected to the one of the terminals (IV) of the component comprise a diode (15, 16) connected in series with a switching transistor (17, 19) the emitter of which is connected to the said terminal (IV), the collector connected to the diode, and the base connected to a corresponding ouput (18, 20) of the control circuit (5).

0 148 808

fig. 1

fig. 2

1

fig. 3

fig. 4